# EUROPÄISCHE PATENTSCHRIFT

(11) **EP 0 603 919 B1**
(45) Veröffentlichungstag und Bekanntmachung des Hinweises auf die Patenterteilung: **03.12.1997**
(21) Anmeldenummer: 93203258.4
(22) Anmeldetag: 22.11.1993
(51) Int. Cl.: B01D 50/00, B01D 47/10

(54) **Verfahren und Vorrichtung zur Nassreinigung von Gasen**
Process and device for wet purification of gases
Procédé et dispositif pour la purification des gaz par voie humide

(30) Priorität: 23.12.1992 DE 4243759
(43) Veröffentlichungstag der Anmeldung: 29.06.1994
(73) Patentinhaber: Metallgesellschaft AG, 60271 Frankfurt am Main (DE)
(72) Erfinder: Bartsch, Arno, D-21439 Marxen (DE)
(74) Vertreter: Hansmann, Dierk, Dipl.-Ing.

(56) Entgegenhaltungen:
- LU-A- 59 081
- US-A- 3 912 469
- US-A- 4 120 670
- US-A- 4 286 973

## Beschreibung

Die Erfindung betrifft ein Verfahren zur Naßreinigung von Gasen, die in einer Leitung mit Waschflüssigkeit bedüst werden, wobei das entstehende Gas-Flüssigkeits-Gemisch durch einen Zyklonabscheider geführt wird und aus diesem Abscheider gereinigtes Gas getrennt von Verunreinigungen enthaltender Waschflüssigkeit abgezogen wird, sowie bei dem das Verunreinigungen enthaltende Gas in einer Vorwaschstrecke mit Waschflüssigkeit bedüst wird und das Waschflüssigkeit enthaltende, von der Vorwaschstrecke kommende Gas durch eine im wesentlichen horizontale Beschleunigungsstrecke geleitet wird, und bei dem das Gas in der Beschleunigungsstrecke erneut mit Waschflüssigkeit bedüst sowie das Gas-Flüssigkeits-Gemisch von der Beschleunigungsstrecke in den Zyklonabscheider geleitet wird.

Die Erfindung betrifft darüber hinaus eine Vorrichtung zur Naßreinigung von Gasen, mit einem gasführenden, mindestens eine Bedüsungseinrichtung für Waschflüssigkeit aufweisenden Kanal, der in einen Zyklonabscheider mündet, aus welchem gereinigtes Gas und getrennt davon Verunreinigungen enthaltende Waschflüssigkeit abziehbar sind und bei der der gasführende Kanal aus einem mindestens eine Bedüsungseinrichtung aufweisenden Vorwaschkanal und einem daran anschließenden, im wesentlichen horizontalen Beschleunigungskanal besteht, der mit dem Zyklonabscheider verbunden ist, sowie bei der der Beschleunigungskanal mindestens eine Bedüsungseinrichtung aufweist.

Gleichzeitig mit der Naßreinigung können die Gase gekühlt und/oder chemisch behandelt werden.

Verfahren und Vorrichtungen dieser Art sind aus dem deutschen Patent 960 452, der deutschen Auslegeschrift 1 300 093 und der PCT-Anmeldung WO 88/03050 bekannt. Hierbei weisen die Leitungen, durch welche das zu reinigende Gas in den Zyklonabscheider strömt, Bedüsungseinrichtungen zum Einbringen von Waschflüssigkeit auf, jedoch wird hierbei nicht auf einen optimalen Gas-Flüssigkeits-Kontakt geachtet.

In der US-A-3 912 469 werden bereits ein Verfahren und eine Vorrichtung beschrieben, mit deren Hilfe eine Naßreinigung von Gasen durchgeführt werden kann. Die Gase werden im Bereich einer Vorwaschstrecke und einer Beschleunigungsstrecke mit Waschflüssigkeit bedüst. An die Beschleunigungsstrecke schließt sich ein Zyklonabscheider an. Aus dem Bereich des Zyklonabscheiders können getrennt voneinander gereinigtes Gas sowie abgeschiedene Verunreinigungen abgezogen werden, wobei sich die Verunreinigungen in der Waschflüssigkeit ansammeln.

Der Erfindung liegt die Aufgabe zugrunde, hier eine Verbesserung zu erreichen und die Gasreinigung kostengünstig durchzuführen. Gleichzeitig soll der Verschmutzung der Reinigungsvorrichtung begegnet und beladene Waschflüssigkeit auf möglichst kurzem Weg aus der Vorrichtung abgeleitet werden.

Beim eingangs genannten Verfahren wird die Aufgabe erfindungsgemäß dadurch gelöst, daß die Querschnittfläche am Eintritt der Beschleunigungsstrecke 1,5 bis 8 mal größer als die Querschnittsfläche am Austritt gewählt wird und daß der Beschleunigungsstrecke eine geringere Menge pro Zeiteinheit an Bedüsungsflüssigkeit als der Vorwaschstrecke zugeführt wird.

Bezüglich der Vorrichtung wird die Aufgabe erfindungsgemäß dadurch gelöst, daß die Querschnittsfläche am Eintritt des Gases in den Beschleunigungskanal 1,5 bis 8 mal größer ist als die Querschnittsfläche am Austritt des Beschleunigungskanals vor dem Zyklonabscheider und daß der Beschleunigungskanal einen Flüssigkeitsabzug aufweist.

Um zu einer verbesserten Waschleistung und einem hohen Abscheidegrad der Waschflüssigkeit im Zyklonabscheider zu gelangen, ist es zweckmäßig, das Gas in der Beschleunigungsstrecke mit größeren Flüssigkeitstropfen als in der Vorwaschstrecke zu bedüsen. Dadurch vereinigen sich die kleineren Tropfen aus der Vorwaschstrecke in der Beschleunigungsstrecke mit den größeren Flüssigkeitstropfen in der Beschleunigungsstrecke. Dabei empfiehlt es sich zusätzlich, die Austrittsgeschwindigkeit der Waschflüssigkeit aus der Bedüsung in das Gas hinein in der Beschleunigungsstrecke möglichst niedrig zu halten.

Die Vorwasch- und die Bedüsungsstrecke weisen jeweils mindestens eine Bedüsungseinrichtung auf. Ohne Schwierigkeiten kann jede Strecke auch mit mehr als einer Bedüsungseinrichtung ausgerüstet werden, zumeist ist es ausreichend, sowohl in der Vorwaschstrecke als auch in der Bedüsungsstrecke mit jeweils zwei Bedüsungen zu arbeiten. Zweckmäßigerweise wird in der Beschleunigungsstrecke eine geringere Menge pro Zeiteinheit an Waschflüssigkeit als in der Vorwaschstrecke versprüht. Um feine Tröpfchen zu erzielen, kann die Bedüsung mit Flüssigkeit und Zerstäubungsluft betrieben werden.

Die im wesentlichen horizontal verlaufende, hoch turbulent durchströmte Beschleunigungsstrecke muß für den nötigen Kontakt zwischen Gas und Flüssigkeitströpfchen ausreichend lang sein, es empfiehlt sich deshalb eine Länge vom 4- bis 20-fachen und vorzugsweise 6- bis 15-fachen des Durchmessers des Eintrittsquerschnitts des Beschleunigungskanals.

Durch den intensiven, direkten Gas-Flüssigkeits-Kontakt im Zyklonwäscher ist die Temperatur des behandelten Gases etwa gleich der Temperatur der aus dem Zyklon abströmenden Flüssigkeit. Durch Rückkühlung der Waschflüssigkeit in einem Wärmetauscher kann auf diese Weise eine erheblich verbesserte Kühlung des Gases erreicht werden, als dies z.B. durch indirekte Kühlung möglich wäre. Zu diesem Zweck wird die im Kreislauf geführte Waschflüssigkeit vor der Wiedereindüsung in einem geeigneten Wärmetauscher z.B. mittels Kühlwasser zurückgekühlt.

Ausgestaltungsmöglichkeiten des Verfahrens und der Vorrichtung werden mit Hilfe der Zeichnung erläutert. Es zeigt:
- Fig. 1: die Reinigungsvorrichtung im Längsschnitt in schematischer Darstellung und
- Fig. 2: eine Draufsicht auf den Zyklonabscheider, entgegengesetzt zur Richtung des Pfeils (A) in Fig. 1 gesehen.

Das Verunreinigungen, insbesondere Staub, Tröpfchen oder unerwünschte gasförmige Komponenten enthaltende Gas strömt in Richtung des Pfeils (1) durch einen Vorwaschkanal (2), der vorzugsweise mit zwei Bedüsungseinrichtungen (3) und (4) versehen ist. Als Waschflüssigkeit kann z.B. Wasser dienen, das in den Leitungen (5) und (6) herangeführt wird. Frischwasser wird durch die Leitung (7) zugespeist. Die Behandlung des Gases kann auch der Kühlung und/oder chemischen Veränderung dienen.

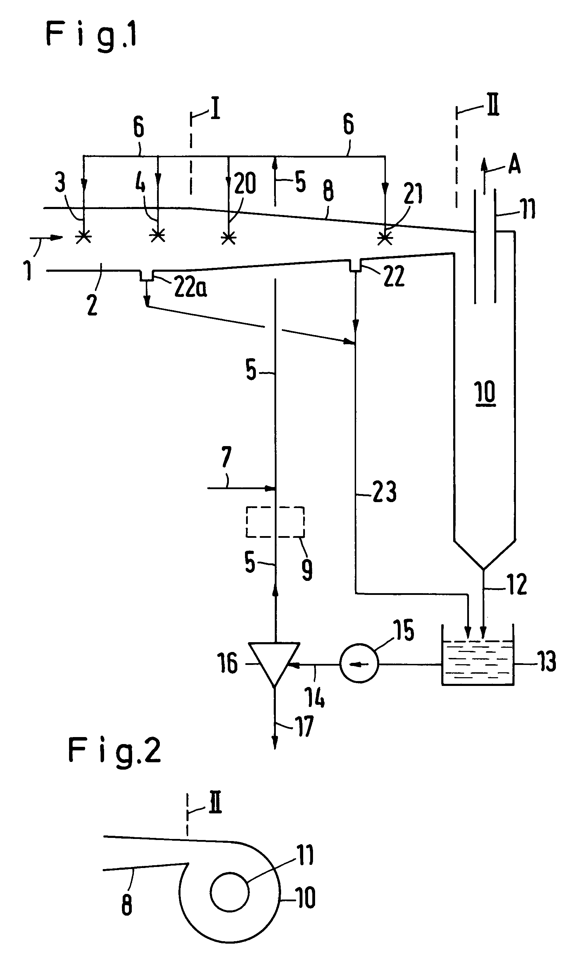

An den Vorwaschkanal (2) schließt sich ein Beschleunigungskanal (8) an, dessen Eintrittsquerschnitt durch die gestrichelte Linie (I) markiert ist und der sich bis zu seinem Austrittsquerschnitt, markiert durch die gestrichelte Linie (II), kontinuierlich verengt. Der Beschleunigungskanal (8) mündet in den oberen, zylindrischen Teil eines Zyklonabscheiders (10), vgl. auch Fig. 2, in welchem Flüssigkeit und Gas getrennt werden. Das gereinigte Gas strömt durch den Reingaskanal (11) in Richtung des Pfeils (A) ab, Verunreinigungen enthaltende Flüssigkeit sammelt sich im unteren Bereich des Zyklons (10) und fließt durch die Leitung (12) in einen Sammelbehälter (13). Im Beschleunigungskanal (8) werden unterschiedliche Geschwindigkeiten zwischen Gas und Flüssigkeitströpfchen zur Verbesserung des Gas-Flüssigkeits-Kontakts und zur Erleichterung der Trennung des Mehrphasen-Gemisches im Zyklonabscheider wirksam.

Der größte Teil der Waschflüssigkeit wird in der Regel im Kreislauf gefahren. Um eine Feststoffanreicherung zu vermeiden, kann sie aus dem Sammelbehälter (13) durch die Leitung (14) mit Hilfe der Pumpe (15) zu einem Hydrozyklon (16) geführt werden, aus dem man Schlammwasser durch die Leitung (17) abzieht. Im Hydrozyklon (16) teilgereinigte Waschflüssigkeit wird in der Leitung (5) zum erneuten Einsatz zurückgeleitet. Falls gewünscht, kann in die Leitung (5) ein indirekter Kühler (9) eingeschaltet sein.

Im Beschleunigungskanal (8) wird das vom Vorwaschkanal (2) kommende Gas, das dort bereits bedüst wurde, erneut mit Waschflüssigkeit bedüst. Hierzu sind die beiden Bedüsungseinrichtungen (20) und (21) vorgesehen. Dabei wird dafür gesorgt, daß das Gas im Beschleunigungskanal (8) mit größeren Flüssigkeitstropfen als im Vorwaschkanal (2) bedüst wird. Dies erreicht man insbesondere dadurch, daß man die Austrittsgeschwindigkeit der Waschflüssigkeit aus den Bedüsungseinrichtungen (20) und (21) in den Beschleunigungskanal (8) hinein niedriger hält als bei den Bedüsungseinrichtungen (3) und (4) der Vorwaschstrecke (2). Dadurch wird insgesamt eine Flüssigkeitsmenge in den Beschleunigungskanal (8) eingedüst, die das 0,2- bis 0,6-fache der in den Vorwaschkanal (2) eingedüsten Flüssigkeitsmenge beträgt.

Die Trägheit der relativ großen Flüssigkeitstropfen in der Beschleunigungsstrecke (8) zusammen mit der zunehmenden Gasgeschwindigkeit in der Beschleunigungsstrecke verstärkt den Gas-Flüssigkeits-Kontakt erheblich und verbessert so die Reinigungsleistung. Gleichzeitig werden feine Flüssigkeitstropfen, die aus der Vorwaschstrecke (2) kommen, im Beschleunigungskanal (8) durch die großen Flüssigkeitstropfen eingefangen, was die Abscheidung dieser Flüssigkeitstropfen im Zyklon (10) verbessert.

Der Beschleunigungskanal (8) weist mindestens einen Flüssigkeitsabzug (22) auf, von dem aus angesammelte Flüssigkeit durch die Leitung (23) zum Sammelbehälter (13) geführt wird. Durch diesen Flüssigkeitsabzug erreicht man eine erhebliche Entlastung des Zyklonabscheiders (10) von Flüssigkeit, was dort das Mitreißen von Flüssigkeitstropfen durch den Reingaskanal (11) verringert. Auch der Vorwaschkanal (2) kann mit mindestens einem Flüssigkeitsabzug (22a) ausgerüstet werden.

### Beispiel

Das Abgas einer metallurgischen Anlage wird durch eine in der Zeichnung dargestellte Vorrichtung gereinigt. Der Vorwaschkanal (2) hat eine Länge von 3 m und einen Durchmesser von 0,4 m, die Bedüsung mit Waschwasser erfolgt an zwei Stellen (3) und (4), nämlich am Eintritt und in der Mitte der Vorwaschstrecke. Der Vorwaschkanal weist einen Flüssigkeitsabzug (22a) auf. Der Beschleunigungskanal (8) ist 3 m lang, die rechteckige Einmündung in den Zyklon (10) hat die Maße 120 x 320 mm. Im Beschleunigungskanal gibt es zwei Bedüsungsstellen (20) und (21) zum Einleiten von Waschwasser und zwar einmal am Beginn und zum anderen in der Mitte der Beschleunigungsstrecke. Der Zyklon (10) hat eine Höhe von 3 m und einen Innendurchmesser von 0,5 m.

Pro Stunde werden 4340 Nm³ Abgas mit einer Temperatur von 84°C mit einer Strömungsgeschwindigkeit von 12,3 m/s in den Vorwaschkanal geleitet. Der Gehalt an metallischem Staub und NaOH im rohen Abgas ist in der Tabelle in Spalte A (in mg/Nm³) angegeben:

| | A Rohgas | B Reingas | C Waschflüssigkeit |
|---|---|---|---|
| As | 27,93 | 0,11 | 450 |
| Pb | 5,56 | 0,14 | 165 |
| Sb | 2,27 | 0,28 | 35 |
| Sn | 36,05 | 0,03 | 1115 |
| Cu | 0,69 | 0,23 | 3 |
| Se | 0,12 | < 0,01 | 14 |
| Te | 0,20 | < 0,01 | 27 |
| NaOH | 534,5 | 4,2 | 14200 |

Die Bedüsungsstationen (3), (4), (20) und (21), die in Strömungsrichtung aufeinanderfolgen (vgl. Fig. 1), haben folgende Charakteristika:

| | (3) | (4) | (20) | (21) |
|---|---|---|---|---|
| Vordruck der Flüssigkeit (bar) | 4,0 | 4,0 | 2,5 | 2,0 |
| Volumenstrom der Flüssigkeit (m³/h) | 14,1 | 4,8 | 3,3 | 3,4 |

| Tropfenspektrum: | | | | |
|---|---|---|---|---|
| Minimum (mm) | 0,2 | 0,02 | 0,02 | 0,2 |
| Maximum (mm) | 1,0 | 0,1 | 0,1 | 1,0 |

Den Bedüsungsstationen (4) und (20) wurde zusätzlich noch Luft zum Zerstäuben der Waschflüssigkeit zugeführt, und zwar jeweils 100 m³/h mit einem Vordruck von 3 bar. Es wird ohne Kühler (9) gearbeitet, die Temperatur des Bedüsungswassers in der Leitung (6) liegt bei 77°C.

Das Reingas, das den Zyklon (10) durch den Kanal (11) mit einer Temperatur von 77°C verläßt, enthält die in der Tabelle in Spalte B angegebenen restlichen Verunreinigungen (in mg/Nm³). Im Bedüsungswasser der Leitung (6) finden sich die Verunreinigungen im stationären Zustand in den in Spalte C angegebenen Konzentrationen (in mg/l).

## Patentansprüche

1. Verfahren zur Naßreinigung von Gasen, die in einer Leitung mit Waschflüssigkeit bedüst werden, wobei das entstehende Gas-Flüssigkeits-Gemisch durch einen Zyklonabscheider (10) geführt wird und aus diesem Zyklonabscheider (10) gereinigtes Gas getrennt von Verunreinigungen enthaltender Waschflüssigkeit abgezogen wird, sowie bei dem das Verunreinigungen enthaltende Gas in einer Vorwaschstrecke (2) mit Waschflüssigkeit bedüst wird und das Waschflüssigkeit enthaltende, von der Vorwaschstrecke (2) kommende Gas durch eine im wesentlichen horizontale Beschleunigungsstrecke (8) geleitet wird, und bei dem das Gas in der Beschleunigungsstrecke (8) erneut mit Waschflüssigkeit bedüst sowie das Gas-Flüssigkeits-Gemisch von der Beschleunigungsstrecke (8) in den Zyklonabscheider (10) geleitet wird, wobei die Querschnittfläche am Eintritt der Beschleunigungsstrecke (8) 1,5 bis 8 mal größer als die Querschnittsfläche am Austritt gewählt wird und der Beschleunigungsstrecke (8) eine geringere Menge pro Zeiteinheit an Bedüsungsflüssigkeit als der Vorwaschstrecke (2) zugeführt wird.

2. Verfahren nach Anspruch 1 bei dem das Gas in der Beschleunigungsstrecke (8) mit größeren Flüssigkeitstropfen als in der Vorwaschstrecke (8) bedüst wird.

3. Verfahren nach Anspruch 1 oder 2, bei dem daß das Gas in der Vorwaschstrecke (2) und in der Beschleunigungsstrecke (8) durch jeweils mindestens eine Bedüsung (3,4) geleitet wird.

4. Vorrichtung zur Naßreinigung von Gasen mit einem gasführenden, mindestens eine Bedüsungseinrichtung (3,4) für Waschflüssigkeit aufweisenden Kanal, der in einen Zyklonabscheider (10) mündet, aus welchem gereinigtes Gas und getrennt davon Verunreinigungen enthaltende Waschflüssigkeit abziehbar sind und bei der der gasführende Kanal aus einem mindestens eine Bedüsungseinrichtung (3,4) aufweisenden Vorwaschkanal (2) und einem daran anschließenden, im wesentlichen horizontalen Beschleunigungskanal (8) besteht, der mit dem Zyklonabscheider (10) verbunden ist, sowie bei der der Beschleunigungskanal (8) mindestens eine Bedüsungseinrichtung (3,4) aufweist, bei der ferner die Querschnittsfläche am Eintritt des Gases in den Beschleunigungskanal (8) 1,5 bis 8 mal größer ist als die Querschnittsfläche (8) am Austritt des Beschleunigungskanals (8) vor dem Zyklonabscheider (10) und der Beschleunigungskanal (8) einen Flüssigkeitsabzug (22) aufweist.

5. Vorrichtung nach Anspruch 4, bei der der Vorwaschkanal (2) und der Beschleunigungskanal (8) jeweils mindestens eine Bedüsungseinrichtung (3,4) aufweisen.

6. Vorrichtung nach Anspruch 4 oder 5, bei der der Beschleunigungskanal (8) eine Länge vom 4- bis 20-fachen des Durchmessers seines Eintrittsquerschnitts aufweist.

7. Vorrichtung nach einem der Ansprüche 4 bis 6, bei der der Vorwaschkanal (2) mindestens einen Flüssigkeitsabzug (22a) aufweist.

## Claims

1. Process for the wet cleaning of gases which are sprayed with scrubbing liquid in a pipe, in which the gas-liquid mixture produced is conveyed through a cyclone separator (10) and cleaned gas is drawn off from said cyclone separator (10) separately from scrubbing liquid containing impurities, and in which the gas containing impurities is sprayed with scrubbing liquid in a pre-scrubbing zone (2) and the gas coming from the pre-scrubbing zone (2) and containing scrubbing liquid is conveyed through a substantially horizontal acceleration zone (8), and in which the gas in the acceleration zone (8) is sprayed once again with scrubbing liquid and the gas-liquid mixture is conveyed from the acceleration zone (8) into the cyclone separator (10), wherein an area of cross-section is selected at the inlet of the acceleration zone (8) which is 1.5 to 8 times greater than the area of cross-section at the outlet and a smaller amount of spraying liquid per unit of time is fed to the acceleration zone (8) than to the pre-scrubbing zone (2).

2. Process according to claim 1, in which the gas in the acceleration zone (8) is sprayed with bigger drops of liquid than in the pre-scrubbing zone (8) (sic).

3. Process according to claim 1 or 2, in which the gas in the pre-scrubbing zone (2) and in the acceleration zone (8) is conveyed through at least one spraying device (3, 4) in each case.

4. Apparatus for the wet cleaning of gases with a gas-bearing channel comprising at least one spraying device (3, 4) for scrubbing liquid, which channel ends in a cyclone separator (10) from which cleaned gas and separately therefrom scrubbing liquid containing impurities can be drawn off, in which the gas-bearing channel consists of a pre-scrubbing channel (2) comprising at least one spraying device (3, 4) and, abutting said pre-scrubbing channel (2), of a substantially horizontal acceleration channel (8) which is connected to the cyclone separator (10), and in which the acceleration channel (8) comprises at least one spraying device (3, 4), in which further the area of cross-section at the inlet of the gas into the acceleration channel (8) is 1.5 to 8 times greater than the area of cross-section (8) at the outlet of the acceleration channel (8) upstream of the cyclone separator (10) and the acceleration channel (8) comprises a liquid draw-off point (22).

5. Apparatus according to claim 4, in which the pre-scrubbing channel (2) and the acceleration channel (8) each comprise at least one spraying device (3, 4).

6. Apparatus according to claim 4 or 5, in which the acceleration channel (8) has a length which is 4 to 20 times the diameter of its inlet cross-section.

7. Apparatus according to any one of claims 4 to 6, in which the pre-scrubbing channel (2) comprises at least one liquid draw-off point (22a).

## Revendications

1. Procédé de purification par voie humide de gaz qui, dans un conduit, sont soumis à l'action de gicleurs débitant du liquide de lavage, procédé selon lequel le mélange de gaz et de liquide produit est amené à passer par un séparateur à cyclone (10) , selon lequel le gaz purifié sortant de ce séparateur à cyclone (10) est retiré, séparé du liquide de lavage qui contient les impuretés, et selon lequel le gaz contenant les impuretés est soumis à l'action de gicleurs débitant du liquide de lavage dans une zone de prélavage (2), selon lequel le gaz contenant du liquide de lavage venant de la zone de prélavage (2) est amené à passer par une zone d'accélération (8), essentiellement horizontale, et selon lequel le gaz, dans la zone d'accélération (8), est à nouveau soumis à l'action de gicleurs débitant du liquide de lavage et le mélange de gaz et de liquide est amené à passer de la zone d'accélération (8) dans le séparateur à cyclone (10), la surface de la section transversale à l'entrée de la zone d'accélération (8) ayant été choisie de 1,5 à 8 fois supérieure à la surface de la section transversale à la sortie de cette zone , et, à la zone d'accélération (8), étant amenée une quantité de liquide de giclage plus faible, par unité de temps, que celle qui est amenée à la zone de prélavage (2).

2. Procédé suivant la revendication 1. selon lequel le gaz, dans la zone d'accélération (8), est soumis à l'action de gicleurs qui débitent des gouttes de liquide plus grosses que celles qui sont débitées dans la zone de prélavage (2).

3. Procédé suivant l'une ou l'autre des revendications 1 et 2, selon lequel le gaz, dans l'une et l'autre des zones de prélavage (2) et d'accélération (8), est amené à passer par au moins un dispositif de giclage (3, 4).

4. Dispositif destiné à la purification de gaz par voie humide, qui comporte un conduit servant au passage du gaz et présentant au moins un dispositif de giclage (3, 4) pour le liquide de lavage, conduit qui débouche dans un séparateur à cyclone (10) duquel peuvent être retirés le gaz épuré et le liquide de lavage qui contient les impuretés ayant été séparées du gaz, dispositif dans le cas duquel le conduit servant au passage du gaz se compose d'un conduit de prélavage (2) présentant au moins un dispositif de giclage (3, 4) et d'un conduit d'accélération (8), essentiellement horizontal, raccordé au conduit de prélavage, conduit d'accélération qui est relié au séparateur à cyclone (10), dispositif dans le cas duquel également le conduit d'accélération (8) présente au moins un dispositif de giclage (3, 4) et dans le cas duquel, en outre, la surface de la section transversale à l'entrée du gaz dans le conduit d'accélération (8) est de 1,5 à 8 fois supérieure à la surface de la section transversale à la sortie du conduit d'accélération (8) se trouvant à l'avant du séparateur à cyclone (10), et le conduit d'accélération (8) présente une sortie de liquide (22).

5. Dispositif suivant la revendication 4, dans le cas duquel le conduit de prélavage (2) et le conduit d'accélération (8) présentent chacun au moins un dispositif de giclage (3, 4).

6. Dispositif suivant l'une ou l'autre des revendications 4 et 5, dans le cas duquel le conduit d'accélération (8) présente une longueur égale à 4 à 20 fois le diamètre de sa section transversale d'entrée.

7. Dispositif suivant l'une quelconque des revendications 4 à 6, dans le cas duquel le conduit de prélavage (2) présente au moins une sortie de liquide (22a).
